# EUROPEAN PATENT SPECIFICATION

(11) **EP 3 298 084 B1**
(45) Date of publication and mention of the grant of the patent: **29.01.2020**
(21) Application number: 16729112.9
(22) Date of filing: 23.05.2016
(51) Int. Cl.: C09D 5/00

(54) **ANTIMICROBIAL AGENT FOR POWDER COATING COMPOSITIONS**
ANTIMIKROBIELLES MITTEL FÜR PULVERBESCHICHTUNGSZUSAMMENSETZUNGEN
AGENT ANTIMICROBIEN POUR COMPOSITIONS DE REVÊTEMENT EN POUDRE

(30) Priority: 21.05.2015 US 201562164870 P
(43) Date of publication of application: 28.03.2018
(73) Proprietor: SWIMC LLC, Cleveland, Ohio 44115 (US)
(72) Inventor: MISTRY, Jigar, K., Minneapolis, MN 55440-1461 (US); BERLINGHOF, Christopher, Wheeling, IL 60090 (US); BARICOS, Cynthia, D., Minneapolis, MN 55440-1461 (US); GELLING, Victoria, J., Minneapolis, MN 55440-1461 (US)
(74) Representative: Vossius & Partner Patentanwälte Rechtsanwälte mbB
(86) International application number: PCT/US2016/033800
(87) International publication number: WO 2016/187618

(56) References cited:
- WO-A1-02/087339
- WO-A1-02/087340
- WO-A2-03/006558
- DE-A1-102012 020 392

## Description

The present invention provides a powder coating composition including an effective amount of at least one antimicrobial agent comprising at least an inorganic bismuth-containing compound as antimicrobial agent, and a method comprising forming a film from the powder coating composition to create a coated article.

### BACKGROUND OF THE INVENTION

Coatings are typically applied to substrates to provide protective or decorative qualities, and can be applied to a wide variety of substrates. Coatings, particularly powder coatings, have a broad range of residential and commercial uses, including uses where many people come in contact with the same surface and surface contamination is common. Due to the broad range of applications, there is a longstanding need in the industry for a powder coating composition that can resist or even prevent microbial growth, including bacterial and fungal growth on coated surfaces. Microbial contamination constitutes a health problem, especially indoors, and can also have significant impact on the aesthetic appearance of a coating.

Antimicrobial coatings are generally recognized in the powder coating industry. However, many such coatings include antimicrobial additives that are potentially toxic and create significant health hazards. Conventional antimicrobials include, for example, inorganic nano-compounds (silver or copper), ligating species, organic compounds capable of absorption by microbes, and known pesticides or biocides. Additionally, some antimicrobial additives may be difficult to combine with standard powder coating compositions. Other conventional antimicrobial components can be rendered ineffective over time due to abrasion and general wear of the coating. Additionally, several antimicrobials may not be economically feasible.

DE-A-10 2012 020 392 describes pigments on the basis of multilayered plate-like substrates, wherein said substrates are coated by at least 4 different coatings (A) to (D), and a formulation containing such pigments, wherein the formulation optionally can contain a further component selected from a voluminous list which also mentions antimicrobial substances.

WO-A-03/006558 describes interference pigments on the basis of multiply coated glass flakes which contain at least three alternating layers with a high and a low refractive index. This document discloses voluminous lists describing layer materials with high refractive index, wherein these lists include BiOCl and bismuth vanadate.

WO-A-02/087340 and WO-A-02/087339 describe a process of manufacturing a metal sheet precoated with an antimicrobial polymer coating, said process comprising applying a polymer coating onto at least one planar surface of the substrate by roll coating or by powder coating the substrate with a polymer containing an antimicrobial powder comprising core particles associated with an antimicrobial metal component, wherein the antimicrobial metal component is selected from silver, copper, zinc, mercury, tin, lead, bismuth, cadmium, chromium, cobalt, nickel, and thallium ions and mixtures thereof.

### SUMMARY

The present description discloses a microbe-resistant powder coating composition that preferably includes at least a polymeric binder, pigment and an antimicrobial agent. In certain embodiments, the present description includes a powder coating composition having an antimicrobial agent, a method of creating a coated article from the powder coating composition possessing an antimicrobial agent, and a coated article having an antimicrobial coating present in the coating.

The claimed invention provides a method comprising (a) providing a powder coating composition including an effective amount of at least one antimicrobial agent comprising at least one inorganic bismuth-containing compound as antimicrobial agent, wherein the inorganic bismuth-containing compound is a bismuth salt of a metal oxyanion or a hydrate thereof; (b) depositing the powder coating composition onto at least a portion of an article; and (c) forming a film from the powder coating composition to create a coated article.
Furthermore, the claimed invention provides a powder coating composition including an effective amount of at least one antimicrobial agent comprising at least an inorganic bismuth-containing compound as antimicrobial agent, wherein the inorganic bismuth-containing compound is a bismuth salt of a metal oxyanion or a hydrate thereof. Moreover, the claimed invention also includes the use of a bismuth salt of a metal oxyanion, a hydrate thereof, or combinations thereof as an antimicrobial agent in a powder coating composition.

The antimicrobial agent of this disclosure when incorporated into a powder coating composition and subsequently applied onto an article offers antimicrobial activity without incorporating toxic or harmful compounds, poisons, heavy metals or volatile compounds generally recognized with conventional antimicrobial agents.

Herein also disclosed is a method of forming a powder coating composition containing an effective amount of at least one antimicrobial agent including at least an inorganic bismuth-containing compound. The antimicrobial agent may be premixed with a polymeric binder, one or pigments and other optional additives to form a suitable powder coating composition through conventional melt processing practices and equipment.

The above summary of the present invention is not intended to describe each disclosed embodiment or every implementation of the present invention. The description that follows more particularly exemplifies illustrative embodiments. In several places throughout the application, guidance is provided through lists of examples, which can be used in various combinations. In each instance, the recited list serves only as a representative group and should not be interpreted as an exclusive list.

The details of one or more embodiments of the invention are set forth in the description below. Other features, objects, and advantages of the invention will be apparent from the description, and from the claims.

### SELECTED DEFINITIONS

Unless otherwise specified, the following terms as used herein have the meanings provided below.

The term "antimicrobial agent" refers to a compound or component that kills microorganisms or inhibits their growth. A microorganism in this context can be any microbe or microscopic organism, including for example, a bacterium, a fungus, or a virus. As used herein, the term "antimicrobial" includes compounds or components regarded as being "antibacterial" or "antifungal."

As used herein, the term "microbe-resistant," when applied to a coating composition, means a coating composition that includes an effective amount of an antimicrobial agent to produce a biostatic effect (e.g. significantly reduce microbial contamination) or even a biocidal effect (e.g. eliminate microbial contamination).

The term "bismuth aluminate" refers to either the hydrated or anhydrous form of the compound.

The term "component" refers to any compound that includes a particular feature or structure. Examples of components include compounds, monomers, oligomers, polymers, and organic groups contained therein.

The term "effective amount" when used in conjunction with an antimicrobial agent refers to an amount sufficient to at least measurably impede the growth of microbes.

The term "on", when used in the context of a coating applied on a surface or substrate, includes both coatings applied directly or indirectly to the surface or substrate. Thus, for example, a coating applied to a primer layer overlying a substrate constitutes a coating applied on the substrate.

The term "powder coating" as used herein, refers to a process that generally deposits a powder composition onto an article. In certain embodiments, the powder may be electrostatically charged to assist in the deposition of the coating composition onto the article. A film is subsequently formed from the powder coating composition by heating, for example, to create a coated article.

As used herein, the term "powder coating system" refers to the powder coating composition, the substrate to be coated, and any and all associated equipment required to carry out a powder coating operation.

Unless otherwise indicated, the term "polymer" includes both homopolymers and copolymers (i.e., polymers of two or more different monomers).

The term "comprises" and variations thereof do not have a limiting meaning where these terms appear in the description and claims.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably. Thus, for example, a coating composition that comprises "an" additive can be interpreted to mean that the coating composition includes "one or more" additives.

Also herein, the recitations of numerical ranges by endpoints include all numbers subsumed within that range (e.g., 1 to 5 includes 1, 1.5, 2, 2.75, 3, 3.80, 4, 5, etc.). Furthermore, disclosure of a range includes disclosure of all subranges included within the broader range (e.g., 1 to 5 discloses 1 to 4, 1.5 to 4.5, 1 to 2, etc.).

### DETAILED DESCRIPTION

The claimed invention relates to the subject-matter as defined in the claims.

The present description provides a microbe-resistant powder coating composition that includes an antimicrobial agent. Certain embodiments of the powder coating compositions may include, for example, at least a polymeric binder, and the antimicrobial agent of this disclosure, and optional components including, for example: one or more pigments, crosslinking agents, dispersing agents, additives, fillers or combinations thereof. In an aspect, the coating composition preferably resists microbial growth. Preferred embodiments incorporate at least one or more pigments in the powder coating composition. However, clear powder coating compositions without pigments may benefit from the incorporation of the disclosed inorganic bismuth-containing compound as an antimicrobial agent. The powder coating composition of the claimed invention is as defined in claim 2.

The powder composition may be any type of organic, inorganic, or hybrid coating, or combinations thereof that preferably incorporate the disclosed antimicrobial agent. Preferred powder coating composition may include a polymeric binder or film forming polymer, one or more pigments, and optionally, a curing or crosslinking agent for the polymer, along with one or more optional additives.

In some embodiments, the individual components of the powder coating compositions are generally premixed and processed, typically at elevated temperatures near or exceeding the melting point or softening point of the polymeric binder or binders, by means of a conventional polymer processing techniques, such as extrusion. The resulting melt-blended mixture typically is solidified and subsequently comminuted into a desired particulate size or size distribution. Depending on the desired coating end use, the comminuting conditions may be adjusted to preferably achieve a median particle size of about 25-150 microns.

The polymeric binder may be selected from any polymer or combination of polymers that are capable of providing the desired film properties. Embodiments of this disclosure contemplate the use of thermoset polymers, thermoplastic polymers, or a combination thereof to form the powder coating composition. Non-limiting examples of suitable polymeric binders include an epoxy, a polyamide, a polyepoxide, acrylic, polyurethane, polyester, polyvinyl chloride, fluoropolymer, silicone or combinations thereof. Acrylics, epoxies, polyurethanes and polyesters are particularly preferred. The polymeric binder may represent at least 40 wt%, preferably at least 60 wt%, more preferably at least 80 wt% and even more preferably at least 90 wt % of the total powder coating composition. In other embodiments, the polymeric binder comprises less than 99.5 wt%, preferably less than 95 wt%, more preferably less than 85 wt% and even more preferably less than 80 wt % based on the total weight of the powder coating composition.

In certain embodiments, a crosslinking agent may be utilized. Those of ordinary skill in the art are capable of selecting a crosslinking agent to match a polymeric binder employed in a powder coating composition. Non-limiting examples of preferred polymeric binders with crosslinking agents include the following: carboxyl-functional polyester resins cured with epoxide-functional compounds such as triglycidylisocyanurate (TGIC), carboxyl-functional polyester resins cured with polymeric epoxy resins, carboxyl-functional polyester resins cured with hydroxyalkyl amides (PRIMID), hydroxyl-functional polyester resins cured with blocked isocyanates or uretdiones, epoxy resins cured with amines such as dicyandiamide, epoxy resins cured with phenolic-functional resins, epoxy resins cured with carboxyl-functional curatives, carboxyl-functional acrylic resins cured with polymeric epoxy resins, hydroxyl-functional acrylic resins cured with blocked isocyanates or uretdiones, unsaturated resins curing through free radical reactions, and silicone resins used either as the sole binder or in combination with organic resins. Crosslinking agents may be included in the powder coating compositions at levels of 0.5 wt% or greater, preferably 1 wt% or greater, more preferably 2 wt% or greater and most preferably 5 wt% or greater. The crosslinking agent may be included at levels up to about 50 wt%, preferably up to about 35 wt%, more preferably up to about 25 wt% and most preferably up to about 10 wt%.

In an aspect, the powder coating composition may include one or more pigment components, including pigments used to tone or opacify the film formed from the coating composition. Suitable examples of pigments include, without limitation, titanium dioxide white, carbon black, lamp black, black iron oxide, red iron oxide, yellow iron oxide, brown iron oxide (a blend of yellow and red oxide with black oxide), phthalocyanine green, phthalocyanine blue, organic reds (such as naphthol red, quinacridone red and toluidine red), quinacridone magenta, quinacridone violent, DNA orange, and/or organic yellows (such as Hansa yellow), for example. In some embodiments, a stable colorant dispersion may be employed. A stable colorant dispersion may include dyes, one or more pigments or a combination thereof. In another aspect, one or more pigments may include a core particle and at least a partial shell about the core particle. In certain embodiments, the one or more pigments may comprise about 50 wt% or less, preferably 30 wt% or less, more preferably 15 wt% or less and even more preferably 5 wt% or less. In other embodiments, a pigment may not be included in the powder coating composition.

Accordingly, in one embodiment, the present description may include an inorganic bismuth-containing compound as antimicrobial agent to prevent, reduce or at least partially eliminate microbial contamination or growth on a coated article. A variety of such antimicrobial agents may be employed. Specific bismuth-containing antimicrobial agents may be selected based upon, for example, the microorganism(s) to be treated; the physical and chemical compatibility of the antimicrobial agent with the system to be treated; the stability of the antimicrobial agent under storage conditions; and toxicity, along with other environmental, and economical factors. The antimicrobial agent desirably is non-allergenic material with low human toxicity. Mixtures of antimicrobial agents, which may or may not have synergistic activity, may also be used.

Accordingly, in an aspect, the antimicrobial agent includes at least a bismuth-containing compound, preferably an inorganic bismuth compound, more preferably multivalent bismuth salts of various anions, and most preferably an inorganic bismuth salt of a metal oxyanion. These compounds include their anhydrous forms as well as various hydrates, including hemihydrate, pentahydrate, and other hydrated forms, along with mixtures and combinations thereof, and the like.
The claimed powder coating composition includes as antimicrobial agent at least an inorganic bismuth-containing compound which is a bismuth salt of a metal oxyanion or a hydrate thereof.

Suitable examples of such bismuth salts of various anions include, without limitation, bismuth silicate, bismuth magnesium aluminosilicate, bismuth aluminate, bismuth borate, bismuth manganate, bismuth phosphate, and the like. In a preferred aspect, the inorganic bismuth-containing compound is a bismuth salt of a metal oxyanion, such as, for example, bismuth aluminate, bismuth manganate, and mixtures or combinations thereof, and the like.

In some embodiments, the inorganic bismuth compound may measurably impede the growth of microbes as indicated by the presence of Colony Forming Units. For example, the presence of an inorganic bismuth-containing compound may reduce the growth of microbes by at least 10%, at least 15% or preferably at least 20% over powder coating compositions without an inorganic bismuth-containing compound or any antimicrobial agent. In other embodiments, the presence of an inorganic bismuth-containing compound may reduce microbial colonies introduced to a coated article by at least 5%, preferably by at least 10%, more preferably by a 1-log reduction and even more preferably by a 2-log reduction.

In some embodiments, the inorganic bismuth-containing compound may be used with one or more organic bismuth-containing compounds, including, for example, bismuth subcarbonate, bismuth subcitrate, bismuth citrate, bismuth titrate, bismuth gallate, bismuth subgallate, bismuth salicylate, bismuth subsalicylate, and the like, for example. The inorganic bismuth-containing compound may be used with one or more other inorganic bismuth-containing compounds, e.g. bismuth compounds that are not metal oxyanions of bismuth. Suitable examples of such compounds include, without limitation, bismuth hydroxide, bismuth trioxide, bismuth nitrate, bismuth subnitrate, and the like, and mixtures or combinations thereof.

Many inorganic compounds are considered difficult to use as antibacterial agents and many have serious drawbacks including environmental toxicity and cost. Surprisingly, an inorganic bismuth-containing compound, such as bismuth aluminate, demonstrates effective antimicrobial activity when used in a powder coating composition, are relatively inexpensive, and are not toxic to the environment.

Moreover, many conventional biocide or biosurfactant systems currently used with coating compositions are used primarily to reduce or inhibit biofilm formation, e.g. sessile microorganism contamination where the microorganisms become attached to parts or substrates to which the coating composition is applied. In contrast, the antimicrobial agent may be used to treat both sessile microorganism contamination as well as contamination caused by freely moving microorganisms, i.e. motile microorganism contamination.

In an aspect, the inorganic bismuth-containing compound may be present in an amount of at least 0.1 wt%, preferably at least 0.2 wt%, more preferably at least 0.5 wt% or even more preferably at least 1 wt%. In preferred embodiments, the powder coating composition includes less than 30 wt%, preferably less than 10 wt%, more preferably less than 5 wt% and even more preferably less than 2 wt %. If the inorganic bismuth-containing compound is used in conjunction with an organic bismuth-containing compound or other catalyst, the inorganic bismuth-containing compound may be present in an amount of about 0.025 wt %, 0.05 wt%, 0.075 wt % to about 0.5 wt %, 1 wt%, 2 wt % or about 5 wt%, based on the total weight of resin solids in the composition. In an alternative embodiment, the antimicrobial agent may provide not only a biocidal function but also serve as a filler in the coating composition.

Alternatively, the inorganic bismuth-containing compound may also be combined with other antimicrobial agents conventionally recognized by those of ordinary skill in the art. Non-limiting examples of antimicrobials include inorganic nano-compounds, ligating species, organic compounds capable of absorption by microbes, and known pesticides or biocides. The amounts of the inorganic bismuth-containing compound may vary depending upon a selected combination.

In addition to at least one polymeric binder, the at least one inorganic bismuth-containing antimicrobial agent, and optionally at least one or more pigments, the powder coating composition may include one or more additives. Additives generally employed in typical powder coating compositions may be used in conjunction with the disclosed inorganic bismuth-containing compound. Suitable additives may include, without limitation, fillers, thixotropes, rheological modifiers, matting agents, antioxidants, color stabilizers, slip and mar additives, UV absorbers, hindered amine light stabilizers, photoinitiators, conductivity additives, tribocharging additives, anti-corrosion additives, extenders, inert pigments, texture agents, degassing additives, flow control agents, dyes, dispersants, degassing agents, anti-outgassign agents, processing aids, flow aids, antifouling compounds, scents and the like. Desirable performance characteristics of a powder coating composition as include, for example, chemical resistance, corrosion resistance, microbe resistance, abrasion resistance, tack resistance, hardness, gloss, reflectivity, extended shelf life, appearance and/or a combination of such properties and similar other properties. Preferred performance enhancing additives include lacquers, waxes, flatting agents, antimicrobial agents, additives to prevent mar, abrasion, and the like. Those of ordinary skill in the art will recognize that selected additives, or combinations of additives, may be included in the powder coating composition at varying levels. Preferably, the additives are included at about 10% or less, and more preferably 5 wt% or less. In some embodiments, fillers, such as for example magnesium sulfide or calcium carbonate, may be used for economic purposes to reduce the overall polymeric binder content in the powder coating composition. In such circumstances, fillers may be included in amounts up to 50 wt% or less, preferably 35 wt% or less and even more preferably 25 wt% or less.

The formation of the powder coating composition containing an inorganic-bismuth-containing compound may involve conventional mixing and melt processing practices. In various embodiments, the components of the powder coating composition may be pre-mixed prior to melt processing or they may be directly fed into the melt processing equipment, such as an extruder, wherein certain elements of the internal conveying equipment may be used to address mixing. The melt mixed composition may be solidified, typically by cooling. The solidified composition may be in the form of pellets, strands, sheets or any form that renders them suitable for subsequent processing or use. In another embodiment, the inorganic bismuth-containing compound may be added after extrusion of the polymeric binder and other optional components.

In certain embodiments, the solidified composition resulting from melt processing practices is preferably modified into a preferred particle size or size range suitable for powder coating applications. The solidified compositions may be comminuted to match a desired sizing specification. Those of ordinary skill in the art are capable of selecting a grinder, powder mill or other comminuting equipment to achieve a desired sizing parameter.

The resulting powder coating composition is preferably at a particle size that can effectively be used in the application process. The particle size (D50) of the powder coating composition may vary from at least about 10 microns, 25 microns, 50 microns, or 100 microns up to about 200 microns, 250 microns, 300 microns, or about 400 microns. For smooth finishes, particles up to 150 microns in size, with a median particle size of 45 microns are most preferred. For textured finishes, particles up to 300 microns in size, with a median particle size of 60 microns may be preferred. The median particle size may vary and is preferably 25 microns, 50 microns or 75 microns up to about 80 microns, 90 microns or 100 microns.

The completed powder coating composition may then be applied onto at least a portion of an article using any conventional method, including spraying, electrostatic spraying, fluidized beds and the like. Following application of the powder coating composition, the article is heated to a temperature sufficient to cause the powder particles to melt and flow and form a film. Various heating sources may be used, including convection heating, infrared heating, induction heating, or a combination thereof. Optionally, the powder may be applied to a preheated substrate.

The methods and practices used for final formation and hardening of the film on the article may vary depending upon the polymeric binder used in the powder coating composition. For example, when thermoset polymeric binders are employed in the coating composition, the film is optionally cured, and such curing may occur via thermal radiation in the form of continued heating, subsequent heating, or residual heat in the substrate. In another embodiment, if a radiation curable polymeric binder is selected, a film may be formed by a relatively short or low temperature heating cycle, and then may be exposed to actinic radiation to initiate the curing process. One example of this embodiment is a UV-curable powder. Other examples of radiation curing include using UV, Visible light, near-IR, IR and E-beam radiation. When thermoplastic polymeric binders are employed in the coating composition, the film, after the application of thermal radiation, is allowed to cool and harden to form a coated article. The method of the claimed invention for creating a coated article is as defined in claim 1.

Preferably, the coated substrate is desirably colored and possesses the physical and mechanical properties necessary to meet end use demands. The thickness of the film may depend upon the desired application of the substrate and the additives selected. Typically, the final film on the coated article may have a thickness of at least 10 microns, preferably at least 25 microns, more preferably at least 75 microns and most preferably at least 100 microns. The coating thickness may be up to 500 microns or less, preferably 350 microns or less, even more preferably 250 microns or less and most preferably 200 microns or less.

Preferably, the inorganic bismuth containing compound functioning as an antimicrobial agent is dispersed throughout the film. In certain embodiments, the film may be relatively thick and the inorganic bismuth containing compound may be present at various levels and locations throughout the film. Such an embodiment may offer advantages to coatings that are susceptible to wear. The inorganic bismuth-containing compound, when dispersed through the film, may offer continued functionality as portion of the coating are worn off of coated article and other inorganic bismuth-containing compounds become exposed or offer microbe-resistance.

In certain embodiments, a coated article having an inorganic bismuth-containing compound incorporated into the coating may exhibit microbe-resistant characteristics. In some aspects, the concentration of the inorganic bismuth-containing compound in the coated article is sufficient to reduce or inhibit microbial contamination. However, the effectiveness of the inorganic bismuth-containing antimicrobial agent may vary depending on factors such as the loading level in the coating, the severity of the contamination, among other factors.

The microbe-resistant powder coating composition possessing an effective amount of at least one antimicrobial agent may be used coat a wide range of articles with various materials of construction. Non-limiting examples include furniture, tables, chairs, benches, hospital equipment and fixtures, public transit equipment and fixtures, fitness equipment, laboratory equipment, manufacturing equipment, hand rails, restroom equipment and accessories, appliances, shower enclosures and cabinets, storage containers, shelves, tanks, vessels, kitchen equipment, recreational equipment, office equipment, automotive interiors and parts, and hotel equipment and fixtures.

### EXAMPLES

The invention is illustrated by the following examples. It is to be understood that the particular examples, materials, amounts, and procedures are to be interpreted broadly in accordance with inventions as set forth herein. Unless otherwise indicated, all parts and percentages are by weight and all molecular weights are weight average molecular weight. Unless otherwise specified, all chemicals used are commercially available from, for example, Sigma-Aldrich, St. Louis, Missouri.

Unless indicated otherwise, the following test methods were utilized in the Examples that follow.

JIS Z 2801: Test for Antibacterial Activity: the test is used to test for antibacterial activity and efficacy to bacteria on the surface of antibacterial powder coating compositions. To test the applied and cured powder coating's ability to kill bacteria, Japanese Industrial Standard JIS Z 2801 was used with the following parameters and modifications: The *E. coli (Bacterial Strain* ATCC8739) was used for Examples 1-7 and methicillin resistant staphylococcus (*Bacterial Strain s.aureus*) was used for Examples 8-11.

Preparation of Inoculum. Prepare bacterial cultures 24 hours before test is scheduled to start by selecting one colony from a plate with a 10µL inoculating loop, adding it to 10mL of sterile TSB and placing it on a shaking incubator. Once cultures are in their log growth phase (16-24 hours after inoculation) they may be used for testing. Combine 1mL of the organism into a pool in a conical tube. Take 1mL of the created pool and add it to 9mL of sterile TSB in a conical tube to get an inoculum concentration of ∼10⁸ CFU/mL.

Preparation of the Coating Sample. Streak the coating samples to a TSA/SDA agar bi-plate to check for sterility to make sure sample was not previously contaminated upon receipt. Incubate plates at 25°C and check for contamination and record at the time points: 24 hours and 7 days. Place three 2.5 cm × 2.5 cm pieces of Parafilm laboratory film in a sterile glass Petri dish. Place 50 mmx50 mm samples from the center of the coating compositions onto each of the pieces of film. Four hundred µl of inoculum (2.5 X 10⁵ Colony Forming Units (CFU)) are then placed on the surface of each composition. After inoculation, the samples are covered with a 40 mm square glass coverslip and incubated for 24 hours at 35 °C. After 24 hours, a 10 ml solution of TSB is added to the petri dishes to wash the inoculum of the samples. The resulting suspension is serially diluted and then plated and the results read from differentiating dilution plates at equal serial dilutions. A total viable count (TVC) is performed on the eluent solution. Colony Forming Units/milliliter (CFU/ml) of bacteria recovered from each sample are counted, if growth is uniform and evenly distributed over the face of a plate then a fraction of the plate is counted and the total CFU count can then be calculated.

**Examples 1-7.** Examples 1-7 were treated with E.coli bacteria and tested in accordance with JIS Z 2801 as described in this disclosure. Example 1 was established as a control and utilized an untreated polyethylene film.

The coatings of Examples 2-4 utilize a carboxy-functional polyester as the polymeric binder at about 54 wt%, a crosslinker of triglycidylisocyanurate (TGIC)of about less than 6 wt%, a white TiO2 pigment of about 30 wt%, barium sulfate and calcium carbonate fillers of about 9%, and processing aids of about 1 wt%. Example 2 did not contain an antimicrobial agent. Example 3 contained bismuth aluminate at about 4 wt% with the barium sulfate and calcium carbonate fillers revised to about 4%. Example 4 included about 1 wt % SteriTouch antimicrobial agent from Alfa Chemicals Ltd, Berkshire Uk with the barium sulfate and calcium carbonate fillers reduced to about 3%. The results are shown in Table 1 and demonstrate that inorganic bismuth containing compounds are capable of impeding growth of colony forming units as compared to Example 1.

The coatings of Examples 5-7 utilize a carboxy-functional polyester as the polymeric binder at about 57 wt%, a crosslinker of hydroxyalkylamide (PRIMID) of about less than 3 wt%, a white TiO₂ pigment of about 30 wt%, barium sulfate and calcium carbonate fillers of about 9%, and processing aids of about 1 wt%. Example 5 did not contain an antimicrobial agent. Example 6 contained bismuth aluminate at about 4 wt% with a corresponding reduction in fillers. Example 7 included about 1 wt % SteriTouch antimicrobial agent from Alfa Chemicals Ltd, Berkshire Uk and corresponding reduction in the amount of filler to compensate for the SteriTouch.

The results for Examples 1-7 are shown in Table 1 and demonstrate that inorganic bismuth containing compounds are capable of reducing colony forming units on a powder coated article.

**Table 1: Escherichia coli**

| | **Number of live organisms (Colony Forming Units)** | | **% reduction of Colony Forming Units, expressed as comparison with Example 1** |
|---|---|---|---|
| **Example** | **0 Hours** | **24 hours** | |
| 1 | 110,000 | 12,000,000 | NA |
| 2 | 110,000 | 10,000,000 | 16% |
| 3 | 110,000 | 2,200,000 | 81% |
| 4 | 110,000 | <10 | 99.99991% |
| 5 | 110,000 | 14,000,000 | -16% |
| 6 | 110,000 | 5,000,000 | 25% |
| 7 | 110,000 | <10 | 99.99991% |

**Examples 8-14.** Examples 8-14 were treated with staphylococcus bacteria and tested in accordance with JIS Z 2801 as described in this disclosure. Example 8 was established as a control and utilized an untreated polyethylene film.

The coatings of Examples 9-11 utilize the same compositions as those set forth in Examples 2-4 with Example 9 containing no antimicrobial, Example 10 containing bismuth aluminate, and Example 11 containing SteriTouch. The results are shown in Table 2 and demonstrate that inorganic bismuth containing compounds are capable of impeding the growth of colony forming units as compared to Example 8.

**Table 2: methicillin resistant staphylococcus**

| | **Number of live organisms (Colony Forming Units)** | | **% reduction of Colony Forming Units, expressed as comparison with Example 8** |
|---|---|---|---|
| **Example** | **0 Hours** | **24 hours** | |
| 8 | 120,000 | 150,000 | NA |
| 9 | 160,000 | 150,000 | 0% |
| 10 | 160,000 | 130,000 | 13% |
| 11 | 160,000 | <10 | 99.99991% |

## Claims

1. A method comprising:
(a) providing a powder coating composition including an effective amount of at least one antimicrobial agent comprising at least one inorganic bismuth-containing compound as antimicrobial agent, wherein the inorganic bismuth-containing compound is a bismuth salt of a metal oxyanion or a hydrate thereof;
(b) depositing the powder coating composition onto at least a portion of an article; and
(c) forming a film from the powder coating composition to create a coated article.

2. A powder coating composition including an effective amount of at least one antimicrobial agent comprising at least an inorganic bismuth-containing compound as antimicrobial agent, wherein the inorganic bismuth-containing compound is a bismuth salt of a metal oxyanion or a hydrate thereof.

3. The composition or method according to any of the preceding claims, wherein the inorganic bismuth-containing compound is bismuth aluminate.

4. The composition or method according to any of the preceding claims, wherein the antimicrobial agent further comprises an organic bismuth-containing compound.

5. The composition according to any of the preceding claims, wherein the powder coating composition comprises at least one thermoset polymer.

6. The method according to any of the preceding claims, wherein the powder coating composition comprises at least one thermoset polymer and forming a film comprises curing the at least one thermoset polymer.

7. The composition according to any of the preceding claims, wherein the powder coating composition comprises at least one thermoplastic polymer.

8. The method according to any of the preceding claims, wherein the powder coating composition comprises at least one thermoplastic polymer and forming a film comprises hardening the at least one thermoplastic polymer.

9. The composition or method according to any of the preceding claims, wherein the powder coating composition further comprises one or more pigments, crosslinking agents, dispersing agents, additives, fillers, carriers or combinations thereof.

10. The composition or method according to any of the preceding claims, wherein the powder coating composition comprises an epoxy, a polyamide, a polyepoxide, acrylic, polyurethane, polyester, polyvinyl chloride, fluoropolymer, silicone or combinations thereof.

11. The composition or method according to any of the preceding claims, wherein the powder coating composition, when applied and cured onto at least a portion of an article, or the coated article demonstrates at least a 10% reduction in growth of microbes over a coated article not having at least one bismuth salt of a metal oxyanion or a hydrate thereof.

12. The composition or method according to any of the preceding claims, wherein the antimicrobial agent is present in an amount of about 0.1 wt% to about 30 wt%.

13. The method according to claim 6, wherein curing comprises the application of actinic radiation or thermal radiation.

14. Use of a bismuth salt of a metal oxyanion, a hydrate thereof, or combinations thereof as an antimicrobial agent in a powder coating composition.

15. The use according to claim 14, wherein the powder coating composition comprises the antimicrobial agent, at least a polymeric binder, and optionally one or more pigments, crosslinking agents, dispersing agents, additives, fillers or combinations thereof.

## Patentansprüche

1. Ein Verfahren, umfassend:
(a) Bereitstellen einer Pulverbeschichtungszusammensetzung, die eine wirksame Menge mindestens eines antimikrobiellen Mittels enthält, das mindestens eine anorganische bismuthaltige Verbindung als antimikrobielles Mittel umfasst, wobei die anorganische bismuthaltige Verbindung ein Bismutsalz eines Metalloxyanions oder eines Hydrats davon ist;
(b) Abscheiden der Pulverbeschichtungszusammensetzung auf mindestens einen Teil eines Gegenstandes; und
(c) Bilden eines Films aus der Pulverbeschichtungszusammensetzung, um einen beschichteten Gegenstand herzustellen.

2. Eine Pulverbeschichtungszusammensetzung, die eine wirksame Menge mindestens eines antimikrobiellen Mittels enthält, das mindestens eine anorganische bismuthaltige Verbindung als antimikrobielles Mittel umfasst, wobei die anorganische bismuthaltige Verbindung ein Bismutsalz eines Metalloxyanions oder eines Hydrats davon ist.

3. Die Zusammensetzung oder das Verfahren gemäß einem der vorhergehenden Ansprüche, wobei die anorganische bismuthaltige Verbindung Bismutaluminat ist.

4. Die Zusammensetzung oder das Verfahren gemäß einem der vorhergehenden Ansprüche, wobei das antimikrobielle Mittel weiter eine organische bismuthaltige Verbindung umfasst.

5. Die Zusammensetzung gemäß einem der vorhergehenden Ansprüche, wobei die Pulverbeschichtungszusammensetzung mindestens ein duroplastisches Polymer umfasst.

6. Das Verfahren gemäß einem der vorhergehenden Ansprüche, wobei die Pulverbeschichtungszusammensetzung mindestens ein duroplastisches Polymer umfasst und Bilden eines Films Härten des mindestens einen duroplastischen Polymers umfasst.

7. Die Zusammensetzung gemäß einem der vorhergehenden Ansprüche, wobei die Pulverbeschichtungszusammensetzung mindestens ein thermoplastisches Polymer umfasst.

8. Das Verfahren gemäß einem der vorhergehenden Ansprüche, wobei die Pulverbeschichtungszusammensetzung mindestens ein thermoplastisches Polymer umfasst und Bilden eines Films Härten des mindestens einen thermoplastischen Polymers umfasst.

9. Die Zusammensetzung oder das Verfahren gemäß einem der vorhergehenden Ansprüche, wobei die Pulverbeschichtungszusammensetzung weiter ein oder mehrere Pigmente, Vernetzungsmittel, Dispersionsmittel, Additive, Füllstoffe, Träger oder Kombinationen davon umfasst.

10. Die Zusammensetzung oder das Verfahren gemäß einem der vorhergehenden Ansprüche, wobei die Pulverbeschichtungszusammensetzung ein Epoxid, ein Polyamid, ein Polyepoxid, Acryl, Polyurethan, Polyester, Polyvinylchlorid, Fluorpolymer, Silikon oder Kombinationen davon umfasst.

11. Die Zusammensetzung oder das Verfahren gemäß einem der vorhergehenden Ansprüche, wobei die Pulverbeschichtungszusammensetzung, wenn sie auf mindestens einen Teil eines Gegenstands aufgetragen und gehärtet ist, oder der beschichtete Gegenstand mindestens eine 10%ige Wachstumsreduktion von Mikroben gegenüber einem beschichteten Gegenstand aufweist, der nicht mindestens ein Bismutsalz eines Metalloxyanions oder eines Hydrats davon aufweist.

12. Die Zusammensetzung oder das Verfahren gemäß einem der vorhergehenden Ansprüche, wobei das antimikrobielle Mittel in einer Menge von etwa 0,1 Gew.-% bis etwa 30 Gew.-% vorhanden ist.

13. Das Verfahren gemäß Anspruch 6, wobei Härten die Anwendung von aktinischer Strahlung oder Wärmestrahlung umfasst.

14. Die Verwendung eines Bismut-Salzes eines Metalloxyanions, eines Hydrats davon oder Kombinationen davon als antimikrobielles Mittel in einer Pulverbeschichtungszusammensetzung.

15. Die Verwendung gemäß Anspruch 14, wobei die Pulverbeschichtungszusammensetzung das antimikrobielle Mittel, mindestens ein polymeres Bindemittel und gegebenenfalls ein oder mehrere Pigmente, Vernetzungsmittel, Dispergiermittel, Additive, Füllstoffe oder Kombinationen davon umfasst.

## Revendications

1. Méthode comprenant :
(a) la fourniture d'une composition de revêtement en poudre contenant une quantité efficace d'au moins un agent antimicrobien comprenant au moins un composé contenant du bismuth inorganique en tant qu'agent antimicrobien, lequel composé contenant du bismuth inorganique est un sel de bismuth d'un oxyanion métallique ou un hydrate de celui-ci ;
(b) la déposition de la composition de revêtement en poudre sur au moins une partie d'un article ; et
(c) la formation d'un film à partir de la composition de revêtement en poudre pour créer un article revêtu.

2. Composition de revêtement en poudre contenant une quantité efficace d'au moins un agent antimicrobien comprenant au moins un composé contenant du bismuth inorganique en tant qu'agent antimicrobien, dans laquelle le composé contenant du bismuth inorganique est un sel de bismuth d'un oxyanion métallique ou un hydrate de celui-ci.

3. Composition ou méthode selon l'une quelconque des revendications précédentes, dans laquelle le composé contenant du bismuth inorganique est l'aluminate de bismuth.

4. Composition ou méthode selon l'une quelconque des revendications précédentes, dans laquelle l'agent antimicrobien comprend en outre un composé contenant du bismuth organique.

5. Composition selon l'une quelconque des revendications précédentes, dans laquelle la composition de revêtement en poudre comprend au moins un polymère thermodurcissable.

6. Méthode selon l'une quelconque des revendications précédentes, dans laquelle la composition de revêtement en poudre comprend au moins un polymère thermodurcissable et la formation d'un film comprend le durcissement de l'au moins un polymère thermodurcissable.

7. Composition selon l'une quelconque des revendications précédentes, dans laquelle la composition de revêtement en poudre comprend au moins un polymère thermoplastique.

8. Méthode selon l'une quelconque des revendications précédentes, dans laquelle la composition de revêtement en poudre comprend au moins un polymère thermoplastique et la formation d'un film comprend le durcissement d'au moins ledit polymère thermoplastique.

9. Composition ou méthode selon l'une quelconque des revendications précédentes, dans laquelle la composition de revêtement en poudre comprend en outre un ou plusieurs pigments, agents de réticulation, agents dispersants, additifs, produits de charge, supports ou leurs combinaisons.

10. Composition ou méthode selon l'une quelconque des revendications précédentes, dans laquelle la composition de revêtement en poudre comprend un époxy, un polyamide, un polyépoxyde, de l'acrylique, du polyuréthane, du polyester, du poly(chlorure de vinyle), du polymère fluoré, de la silicone ou leurs combinaisons.

11. Composition ou méthode selon l'une quelconque des revendications précédentes, dans laquelle la composition de revêtement en poudre, lorsqu'elle est appliquée et durcie sur au moins une partie d'un article, ou l'article revêtu présente une réduction d'au moins 10 % de la prolifération des microbes par rapport à un article revêtu n'ayant pas au moins un sel de bismuth d'un oxyanion métallique ou un hydrate de celui-ci.

12. Composition ou méthode selon l'une quelconque des revendications précédentes, dans laquelle l'agent antimicrobien est présent en une quantité d'environ 0,1 % en poids à environ 30 % en poids.

13. Méthode selon la revendication 6, dans laquelle le durcissement comprend l'application d'un rayonnement actinique ou d'un rayonnement thermique.

14. Utilisation d'un sel de bismuth d'un oxyanion métallique, d'un hydrate de celui-ci, ou de combinaisons de ceux-ci, en tant qu'agent antimicrobien dans une composition de revêtement en poudre.

15. Utilisation selon la revendication 14, dans laquelle la composition de revêtement en poudre comprend un agent antimicrobien, au moins un liant polymère, et optionnellement un ou plusieurs pigments, agents de réticulation, agents dispersants, additifs, produits de charge ou leurs combinaisons.
